# DEMANDE DE BREVET EUROPEEN

(11) **EP 0 684 499 A1**
(43) Date de publication de la demande: **29.11.1995**
(21) Numéro de dépôt: 95401186.2
(22) Date de dépôt: 22.05.1995
(51) Int. Cl.: G02F 1/1335, G02F 1/1343

(54) **Ecran plat d'affichage à cristaux liquides et filtre coloré et procédé de fabrication d'un tel écran**

(30) Priorité: 25.05.1994 FR 9406349
(71) Demandeur: SAGEM S.A., F-75016 Paris (FR)
(72) Inventeur: Parker, Ambroise, F-92500 Rueil-Malmaison (FR); Lecat, Daniel, F-95100 Argenteuil (FR)
(74) Mandataire: Fort, Jacques

(57) **Abrégé**

L'écran de visualisation comprend un filtre transmissif ayant un substrat transparent (14) portant sur une face une mosaïque (22) de pixels colorés constituée par un cliché photographique contenant des émulsions au moins trichromes et une cellule à cristaux liquides ayant sur une face des électrodes de commande définissant une matrice de pixels dont la disposition correspond à celle de la mosaïque ; les électrodes de commande sont reliées à une unité permettant de modifier la transparence de chaque pixel de la cellule, et, sur l'autre face, une contre électrode (20) transparente constituée d'une couche mince d'ITO. La couche mince est constituée d'ITO à résistivité élevée et est séparée du cliché par une pellicule de pasivation (24) en un matériau polymère déposé à une température inférieure à 200°C.

## Description

La présente invention concerne les écrans de visualisation dits plats, qui comportent un filtre coloré, c'est-à-dire un filtre qui présente une mosaïque de zones ou "pixels" ayant chacun l'une d'au moins trois couleurs fondamentales, disposés suivant un réseau régulier, et une cellule ayant des électrodes de commande définissant une matrice de pixels dont la disposition correspond à celle de la mosaïque, les électrodes de commande étant reliées à une unité de commande permettant de modifier la transparence de chaque pixel de la cellule. Le pas de répartition des pixels est choisi suffisamment faible pour que, à la distance normale d'observation, l'oeil ne puisse dissocier les couleurs fondamentales et ne soit sensible qu'à leur combinaison.

La cellule de l'écran est constituée par une couche de cristaux liquides de quelques microns d'épaisseur, emprisonnée entre deux plaques transparentes, ces plaques portant des réseaux d'électrodes définissant un condensateur élémentaire pour chaque pixel, destinées à être reliées à l'unité de commande qui permet de charger temporairement chaque condensateur élémentaire afin d'ajuster la transparence du pixel correspondant.

A l'heure actuelle, la plupart des écrans à cristaux liquides comportent une source d'éclairage, une cellule du genre ci-dessus et un filtre coloré de nature composite, ayant un substrat revêtu d'une couche imprégnée de colorant réparti de façon à constituer les pixels.

Toutefois, on a proposé (EP-A-0 341 348) de constituer des filtres colorés ayant une répartition régulière de pixels par des procédés photographiques, plutôt que par des techniques de dépôt et de gravure de produits organiques colorés. Mais les filtres ainsi réalisés résistent mal aux températures élevées jugées jusqu'ici nécessaires pour compléter la fabrication d'un écran plat.

En effet, le filtre coloré reçoit une contre électrode constituée par une couche mince d'oxyde d'indium et d'étain, généralement dénomée ITO, qui, pour avoir la densité ohmique (ou résistance par carré) ne dépassant pas quelques Ω/□ jugée jusqu'ici nécessaire, devait être déposée à une température d'environ 200°C. Le filtre coloré constitué par une émulsion photographique à base de gélatine doit au surplus être séparé de la couche formant la contre électrode par une pellicule de passivation. Cette pellicule de passivation est destinée à éviter l'absorption d'eau par la gélatine du cliché et la pollution par l'ITO lors du dépôt de ce dernier. Mais la polymérisation in situ de produits propres à réaliser cette passivation, appliqués par centrifugation ou au rouleau, exigerait des températures élevées, également peu compatibles avec la tenue des gélatines photographiques.

La présente invention vise notamment à fournir un écran plat du type ci-dessus défini, comportant un filtre à émulsions photographiques, cet écran ayant une constitution autorisant une réalisation sans risque d'endommagement des émulsions.

Dans ce but, l'invention propose un écran plat de visualisation suivant la revendication 1.

Cette constitution est rendue possible du fait qu'il a été constaté qu'une cellule à matrice active, c'est-à-dire comportant un élément électronique de commande de chaque pixel, tel qu'un transistor en couche mince TFT, directement incorporé à la cellule, permet d'admettre une densité ohmique nettement plus élevée que celles jugées jusqu'à présent nécessaires (et qui le sont effectivement pour les écrans à matrice passive ou à matrice à diodes).

Parmi les matériaux disponibles utilisables pour constituer une telle pellicule de passivation, en remplissant les conditions de température ci-dessus, le plus favorable semble être le polypara-xylylène obtenu par condensation de vapeur et polymérisation, pouvant être à température ambiante, de para-xylylène. Les méthodes de dépôt plus classiques, telles que l'étendage par centrifugation ou au rouleau, peuvent aussi être utilisées. La pellicule ainsi constituée, sous une épaisseur de 1 à 5 µm, est imperméable à l'eau et à la vapeur d'eau et ne présente pas de piqûres d'aiguille. Le matériau de départ peut notamment être celui commercialisé par Union Carbide sous la marque Parylène C.

Il est également possible d'utiliser un polyacrylate, tel que celui commercialisé par la société Japan Synthetic Rubber, qui est également étanche à l'eau. Mais ce matériau n'est pas étanche à la vapeur d'eau et au gaz de sorte que les émulsions, hydrophiles du fait de la présence de la gélatine, ne sont pas protégées jusqu'au dépôt de la couche d'ITO et au surplus risquent d'être altérées par cette dernière lors de sa réalisation.

L'invention propose également un procédé de fabrication d'un écran du type ci-dessus, conforme à la revendication 3.

L'alignement des cristaux liquides dans une direction prédéterminée au repos requiert en général le dépôt, sur la couche d'ITO, d'une couche d'alignement qui est généralement en polyimide. A l'heure actuelle, on forme cette couche par dépôt de monomère au rouleau, puis polymérisation à la température élevée que supportent les filtres traditionnels. L'invention propose également de réaliser la couche d'alignement par dépôt d'un matériau organique prépolymérisé, dans un solvant qu'il suffit ultérieurement d'éliminer par passage en étuve à température modérée.

L'invention vise également à fournir un procédé de constitution du maître négatif en couleur, utilisable quelle que soit la destination finale du cliché ayant une mosaïque de pixels colorée réalisable à partir d'un tel maître négatif.

Suivant ce procédé, pouvant être mis en oeuvre sur une machine très similaire aux photorépéteurs sur tranche (ou "step-and-repeat machine") utilisés pour la fabrication de circuits intégrés, une plaque ou un film photographique vierge en couleurs destiné à constituer le maître est soumis successivement à :
- une première série de deux ou trois insolations en lumière blanche destinée à constituer uniquement les pixels d'une des trois couleurs fondamentales du maître négatif (cyan, magenta et jaune), successivement à travers deux ou - trois filtres différents (parmi le rouge, le vert et le bleu) de transmittivité choisie pour reconstituer la couleur fondamentale respective, chaque fois à travers un masque présentant des zones transparentes reproduisant la répartition des pixels de la couleur fondamentale respective ;
- une seconde série de deux ou trois insolations, à travers des filtres différents, chaque fois à travers le masque après déplacement relatif de la plaque ou du film dans son plan par rapport au masque, d'un pas permettant de passer d'un pixel de la mosaïque à un autre ; et
- une troisième série de deux ou trois insolations, avec d'autres filtres différents, permettant de constituer les pixels de la troisième couleur fondamentale, après un autre déplacement d'un pas.

Le procédé peut s'accompagner d'une mise au point dans la direction orthogonale à la plaque ou au filtre (direction z). Une quatrième insolation peut être effectuée pour constituer une grille opaque de séparation entre les pixels de la mosaïque.

Au cours de la fabrication des filtres colorés destinés à être incorporés aux écrans, le maître négatif peut être utilisé juxtaposé à un filtre d'homogénéisation du flux lumineux, du genre décrit dans la demande de brevet français n° 92 14118 de la titulaire de la présente demande(EP-A-0 599 725).

L'invention sera mieux comprise à la lecture de la description qui suit d'un mode particulier de réalisation, donné à titre d'exemple non-limitatif. La description se réfère aux dessins qui l'accompagnent, dans lesquels :
- la figure 1 est un schéma de principe en coupe, montrant une constitution d'écran de visualisation à cristaux liquides à laquelle peut être appliquée l'invention, l'échelle n'étant pas respectée pour plus de clarté ;
- la figure 2 est un schéma montrant la séquence des opérations de fabrication de l'écran ; et
- la figure 3 est un schéma de principe d'un appareil de génération du maître négatif de réalisation d'un filtre.

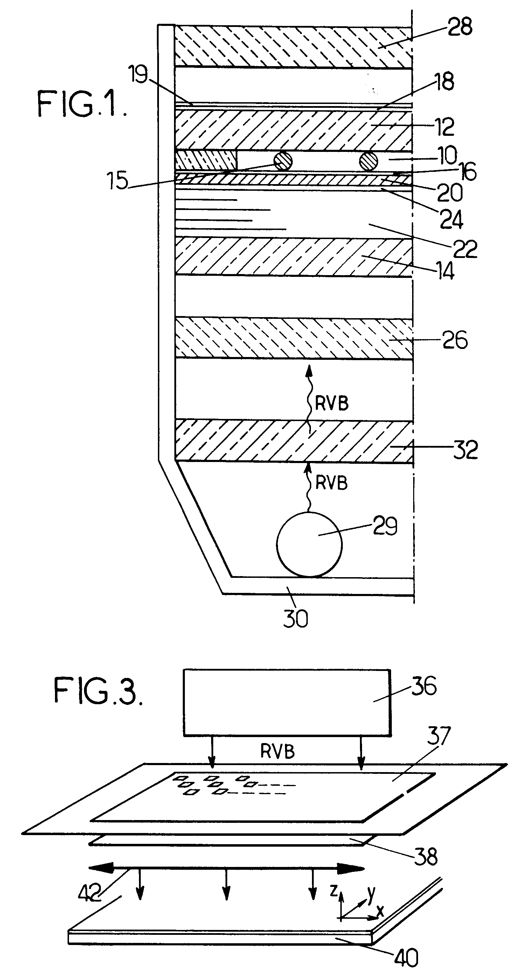

L'écran de visualisation dont la constitution de principe est montré en figure 1 comporte une couche mince 10 de cristaux liquides (ayant généralement quelques microns d'épaisseur) placée entre deux lames transparentes 12 et 14, généralement en verre, séparées par des espaceurs 15. Les cristaux liquides, lorsqu'ils ne sont pas excités par un champ électrique, sont orientés par un dépôt d'accrochage 16, généralement en polyimide brossé dans la direction souhaitée d'alignement des molécules.

Les lames transparentes 12 et 14 portent, directement ou non, des électrodes permettant de constituer des condensateurs élémentaires correspondant chacun à un pixel. La lame 12 peut par exemple porter, sur sa face externe des électrodes de commande formant une matrice 18. Chaque électrode est reliée à un transistor en couche mince, appartenant à une matrice électronique de commande 19 réalisée par la technologie des circuits intégrés et superposée à la matrice d'électrodes. L'autre lame transparente 14 porte une contre électrode 20 également transparente, constituée par un dépôt mince d'oxyde d'étain et d'indium ou ITO.

La contre électrode 20 peut être constituée par un plan de masse continue et dans ce cas la commande s'effectue ligne par ligne de la matrice. Il est également possible d'adopter la constitution de contre électrode interdigitée décrite dans la demande de brevet française n° 92 08159, adaptée à un afficheur trichrome.

L'écran comporte de plus un filtre coloré trichrome 22 qui est directement déposé sur la face interne de l'autre lame transparente, sur la lame 14 dans le cas de la figure 1, et qui se trouve à l'intérieur même de l'espace délimité par les deux lames. Ce filtre coloré trichrome est constitué par une mosaïque de pixels colorés, ayant une répartition identique à celle des électrodes de la matrice 18. Dans la plupart des cas, cette mosaïque est complétée par un maillage opaque, destiné à séparer les pixels les uns des autres et à améliorer le contraste.

Pour éviter un contact direct entre le filtre, constitué par des émulsions, et la contre électrode en ITO, une pellicule mince de passivation 24 est déposée sur les émulsions. Ces dernières, prévues en général pour fournir des images en couleur par synthèse additive, peuvent être constituées à partir d'un film ou d'une plaque vierge du genre décrit dans le document EP-A-0 341 348 auquel on pourra se reporter.

Enfin l'ensemble ainsi constitué est placé entre deux polariseurs 26 et 28 et il est éclairé par une source lumineuse ayant un ou plusieurs générateurs fournissant un spectre lumineux ayant une énergie suffisante aux longueurs d'onde des couleurs fondamentales choisies, qui sont celles des pixels du filtre. Ces générateurs sont par exemple des tubes fluorescents 29, dont le flux lumineux de sortie, partiellement renvoyé par un réflecteur 30, traverse un écran diffuseur 32.

Lorsque le filtre coloré est de constitution classique, il est possible de réaliser la contre électrode 20 et la pellicule de passivation 24 à des températures élevées, permettant de donner une valeur faible à la densité ohmique de la contre-électrode et de polymériser sur place le matériau organique constitutif de la pellicule de passivation. Ces températures élevées sont incompatibles avec un filtre coloré obtenu par voie photographique.

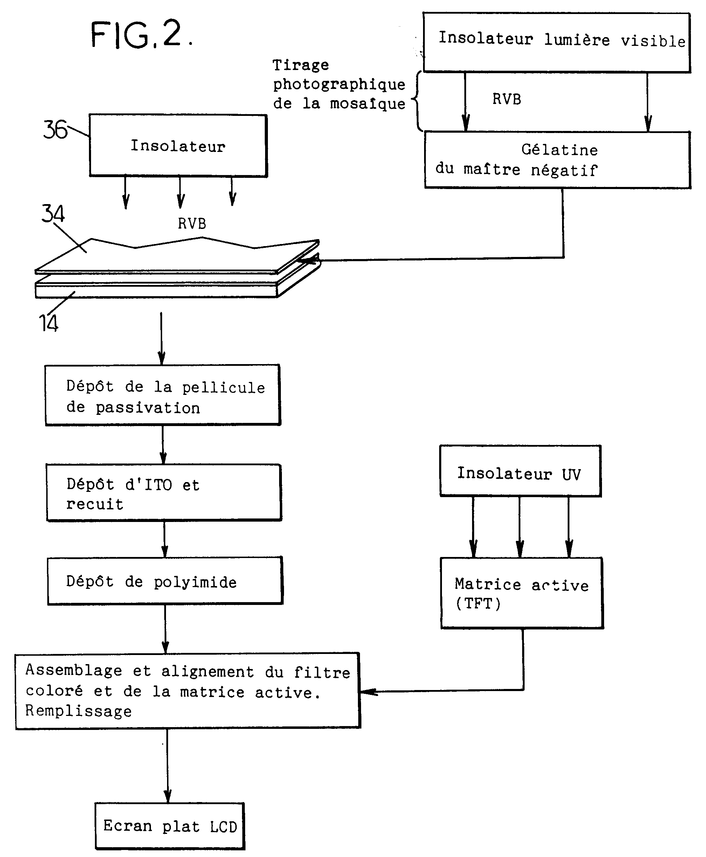

Dans ce cas, le procédé schématisé en figure 2 peut être adopté. Le filtre coloré est fabriqué par insolation et développement des émulsions photographiques vierges, directement portées par la lame 14, à travers un maître négatif 34, à l'aide d'un insolateur 36 en lumière blanche. Le filtre est ainsi réalisé en une seule opération. Sur l'émulsion est ensuite déposée la pellicule de passivation 24, par un procédé ne mettant pas en oeuvre des températures élevées. La solution la plus avantageuse à l'heure actuelle consiste à former une couche de polypara-xylylène, tel que celui connu sous la dénomination Parylène C, par condensation de vapeur de para-xylylène à température ambiante. La pellicule réalisée aura généralement une épaisseur comprise entre 1 et 5 µm, suffisante pour assurer l'étanchéité. La contre-électrode 20 en ITO est ensuite déposée par un processus classique, mais la température de recuit est limitée à 180°, et en général à 150°C, ce qui suffit pour obtenir une densité ohmique ne dépassant pas 100 Ω/□, et généralement comprise entre 10 et 50 Ω/□. Les gélatines photographiques courantes résistent de façon satisfaisante à une telle température de 150°C. La couche d'alignement, classiquement réalisée par polymérisation in situ de polyimide, est constituée, dans le cas du procédé suivant l'invention par un procédé à basse température, notamment par dépôt de polyimide prépolymérisé, dans un solvant qui est ensuite éliminé à basse température, éventuellement sous une atmosphère légèrement inférieure à la pression atmosphérique. La couche d'accrochage peut ensuite être brossée dans le sens d'alignement, suivant un processus classique.

La matrice électronique de commande, formée par un circuit intégré en couche mince, de façon à être transparent est fabriquée séparément. Puis elle est assemblée sur la lame 12 qui est placée sur les intercalaires 15 et alignée de façon à assurer la coïncidence entre les pixels du filtre coloré et ceux de la matrice d'électrodes de commande. Enfin, le remplissage en cristaux liquides est effectué et l'espace occupé par des cristaux liquides est obturé de façon étanche. La grande dureté du polyimide, qui s'accroche bien sur l'ITO et la gélatine, évite son enfoncement sous l'action des intercalaires 15.

La figure 3 montre un procédé avantageux de réalisation du maître négatif autorisant la fabrication de chaque filtre coloré 22 en une seule étape.

L'opération de fabrication s'effectue en trois séquences de chacune deux ou trois insolations, chaque séquence étant séparée de la suivante par un déplacement transversal de longueur égale à l'intervalle séparant deux pixels adjacents de couleurs différentes.

L'insolateur 36, fournissant une lumière dont le spectre a une énergie suffisante aux longueurs d'onde des couleurs fondamentales choisies, comporte des moyens pour recevoir un masque 37 présentant des fenêtres dont la répartition est celle des pixels d'une des couleurs du filtre coloré. L'insolateur est prévu pour recevoir également, sur le trajet lumineux, des filtres colorés 38. Une solution commode consiste à utiliser trois jeux de filtres 38. Dans chaque jeu les deux ou trois filtres ne sont chacun transparents que pour une des trois couleurs fondamentales (rouge, vert et bleu en général). L'absorption de lumière des filtres d'un jeu déterminé est choisie pour qu'une insolation à partir d'un même flux lumineux primaire successivement à travers les deux ou trois filtres du jeu génèrent, dans les émulsions d'une plaque 40, la couleur cyan pour un jeu, magenta pour un autre et jaune pour le troisième.

Les opérations successives sont alors les suivantes (figure. 3).

Au cours d'une première séquence, la plaque 40 est insolée à travers le masque 37, un premier filtre 38 et éventuellement une optique 42. L'opération est répétée avec les deux autres filtres du même jeu.

Ensuite le masque (ou la plaque) est déplacé dans son plan, de façon que les zones qui seront illuminées au cours de la séquence suivante soient décalées des premières de l'intervalle correspondant au pas entre pixels successifs de la mosaïque. Fréquemment, un déplacement suivant une seule direction **x** est suffisante. Dans d'autres cas, du fait d'une disposition particulière des pixels de la mosaïque, des déplacements en **x** et **y** peuvent être nécessaires. Il peut également être nécessaire d'effectuer un ajustage dans la direction **z** : la mise au point peut être vérifiée sous microscope.

Le second jeu de filtres est alors utilisé pour impressionner les zones de négatif correspondant à la seconde couleur de la mosaïque.

Une fois cette opération terminée, un second déplacement, puis une nouvelle insolation sont effectués, avec le troisième filtre.

Ensuite la plaque peut être traitée de façon classique. Elle sera ultérieurement utilisée pour la réalisation des filtres colorés en positif.

Le filtre coloré maître peut être réalisé par le procédé décrit dans la demande de brevet français n° 92 14118 déja mentionnée, de façon à assurer non seulement la synthèse des couleurs à partir de trois couleurs primaires, mais aussi la compensation des variations spatiales d'éclairement de la source d'illumination de l'écran d'affichage complet.

## Revendications

1. Ecran plat de visualisation comprenant :
- un filtre transmissif ayant un substrat transparent (14) portant sur une face une mosaïque de pixels colorés constituée par un cliché photographique contenant des émulsions au moins trichromes ; et
- une cellule à cristaux liquides ayant sur une face des électrodes de commande définissant une matrice de pixels dont la disposition correspond à celle de la mosaïque, les électrodes de commande étant reliées à une unité permettant de modifier la transparence de chaque pixel de la cellule, et, sur l'autre face, une contre électrode transparente constituée d'une couche mince d'ITO ;
caractérisé en ce que ladite couche mince est constituée d'ITO à résistivité élevée, donnant à la couche mince une densité ohmique comprise entre 10 et 100 Ω/□, et
en ce que ladite couche mince est séparée du cliché par une pellicule de passivation en un matériau polymère déposé à une température inférieure à 200°C.

2. Ecran plat suivant la revendication 1, caractérisé en ce qu'il est à matrice active.

3. Procédé de fabrication d'un écran plat de visualisation comprenant :
- un filtre transmissif ayant un substrat transparent portant sur une face une mosaïque de pixels colorés constituée par un cliché photographique contenant des émulsions au moins trichromes ; et
- une cellule à cristaux liquides ayant, sur une face, des électrodes de commande définissant une matrice de pixels dont la disposition correspond à celle de la mosaïque, les électrodes de commande étant reliées à une unité permettant de modifier la transparence de chaque pixel de la cellule, et, sur l'autre face, une contre électrode transparente constituée d'une couche mince d'ITO ;
caractérisé en ce que :
- on insole un substrat transparent, portant les émulsions photosensibles destinées à constituer la mosaïque de pixels, à travers un maître négatif en couleurs, reproduisant la mosaïque, pour constituer un filtre transmissif ;
- on constitue, sur les émulsions, une pellicule étanche de passivation par condensation de vapeur et polymérisation d'un produit organique à une température inférieure à 180°C, et de préférence à 150°C ;
- on dépose, sur la pellicule, une contre électrode transparente en ITO de 0,1 à 0,5 µm d'épaisseur, que l'on recuit à une température inférieure à 180°C et de préférence à 150°C jusqu'à atteindre une densité ohmique comprise entre 10 et 100 Ω/□.

4. Procédé selon la revendication 3, caractérisé en ce qu'on constitue la pellicule de passivation par condensation de vapeur de para-xylylène.

5. Procédé selon la revendication 4, caractérisé en ce qu'on effectue la condensation à température ambiante.

6. Procédé selon la revendication 3, 4 ou 5, caractérisé en ce qu'on constitue entre la couche d'ITO et les cristaux liquides, une couche d'accrochage et d'alignement par dépôt d'un matériau organique prépolymérisé dans un solvant et évaporation du solvant.

7. Procédé selon la revendication 6, caractérisé en ce que le matériau organique est un polyimide.

8. Procédé selon l'une quelconque des revendications 3 à 7, caractérisé en ce que, pour constituer le maître négatif en couleurs, on soumet successivement une plaque ou un film photographique vierge en couleurs à :
- une première série de deux ou trois insolations en lumière blanche destinée à constituer uniquement les pixels d'une des trois couleurs fondamentales du maître négatif (cyan, magenta et jaune), successivement à travers deux ou trois filtres différents (rouge, vert et bleu) de transmittivité choisis pour reconstituer la couleur fondamentale respective, chaque fois à travers un masque présentant des zones transparentes reproduisant la répartition des pixels de la couleur fondamentale respective ;
- une seconde série de deux ou trois insolations, à travers deux ou trois filtres différents, chaque fois à travers le masque après déplacement relatif de la plaque ou du film dans son plan par rapport au masque, d'un pas permettant de passer d'un pixel de la mosaïque à un autre ; et
- une troisième série de deux ou trois insolations, avec deux ou trois autres filtres différents, permettant de constituer les pixels de la troisième couleur fondamentale, après un autre déplacement d'un pas.
